(19) Europäisches Patentamt
European Patent Office
Office européen des brevets

(11) Numéro de publication: **0 252 798 B1**

(12) # FASCICULE DE BREVET EUROPEEN

(45) Date de publication du fascicule du brevet: **12.09.90**

(51) Int. Cl.⁵: **C09D 17/00,** C09B 67/00, C08F 2/38

(21) Numéro de dépôt: **87401441.8**

(22) Date de dépôt: **23.06.87**

(54) **Véhicules pour concentrés pigmentaires à base de télomères et concentrés en contenant.**

(30) Priorité: **01.07.86 FR 8609543**

(43) Date de publication de la demande:
**13.01.88 Bulletin 88/2**

(45) Mention de la délivrance du brevet:
**12.09.90 Bulletin 90/37**

(84) Etats contractants désignés:
**AT BE CH DE ES FR GB GR IT LI LU NL SE**

(56) Documents cités:
**FR-A- 1 540 020**
**GB-A- 2 005 697**
**US-A- 3 945 843**
**US-A- 4 293 475**

(73) Titulaire: **TELOSUD, Z.I. de Meze B.P. 90, F-34140 Meze(FR)**

(72) Inventeur: **Legrand, Pierre, 5, Lotissement Les Aires Villeveyrac, F-34140 Meze(FR)**
Inventeur: **Vanspeybroeck, Henri, 37, rue du Fresnoy, F-60134 Villers/ST/Sepulcre(FR)**
Inventeur: **Pietrasanta, Yves, Place Méril Poujade, F-34140 Meze(FR)**
Inventeur: **Boutevin, Bernard, 1, rue Anselme Mathieu Les terres Blanches, F-34000 Montpellier(FR)**
Inventeur: **Rigal, Gérard, Rue des Frères Argand, F-34140 Meze(FR)**

(74) Mandataire: **Moncheny, Michel et al, c/o Cabinet Lavoix 2 Place d'Estienne d'Orves, F-75441 Paris Cedex 09(FR)**

EP 0 252 798 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne des véhicules pour concentrés pigmentaires à base de télomères ou de cotélomères et des concentrés pigmentaires qui en contiennent et qui sont utilisables dans des milieux chimiques variés.

De nombreux brevets ont été déposés concernant des molécules aptes à réaliser des concentrés pigmentaires, en particulier :

- Le brevet européen 0 018 099 de I.C.I. décrit un agent dispersant de formule générale

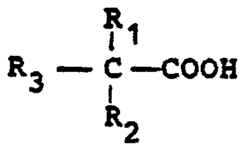

dans laquelle $R_1$ et $R_2$ sont chacun $C_n H_{2n}$ et où n = 1 à 8 et X un groupement réactif avec un groupe isocyanate et où $R_3$ = ($C_1$ à $C_8$)alkyle ou un groupe alkyle substitué. Cependant les concentrés pigmentaires fabriqués avec ce type de molécule ne sont pas dispersibles dans l'eau.

- La demande de brevet français 83 13 446 (FR-A-2 550 795) de NIPPON PAINT C.O. concerne des concentrés pigmentaires universels obtenus à partir d'une résine acide et d'une résine basique à base de mélamine formaldéhyde, les concentrés obtenus n'étant toutefois utilisables que dans les milieux solvants.
- Le brevet allemand DE-A-2 830 860 de IC.I. décrit un agent dispersant préparé à partir de polyester, polyalkylamine et d'un acide gras hydroxylé, les concentrés pigmentaires réalisés avec cet agent étant destinés aux encres et aux peintures industrielles en milieu solvant.
- Le brevet français n° 7 826 583 (FR-A-2 404 017) de ROHM AND HAAS COMPANY parle de concentrés pigmentaires obtenus à partir d'un copolymère hydrosoluble obtenu à partir d'acides carboxyliques à insaturations alpha-bêta-monoéthylénique à l'état de sel ou d'acide libre-ces concentrés pigmentaires ne sont utilisables que dans les milieux aqueux.
- Le brevet US-A-3 945 843 décrit un procédé de dispersion rapide de solides tels que des pigments à l'aide d'un copolymère d'acrylate de méthyle et d'acide acrylique dont la chaîne est limitée par l'emploi d'acide thioglycolique.

Cependant aucun de ces documents ne décrit un type de molécule notamment pour concentrés pigmentaires, compatible avec des milieux chimiques très variés, aqueux ou organiques.

Les peintures, les vernis, les encres et les adhésifs sont constitués par un mélange intime de résines, de pigments et charges, de solvants et d'additifs.

Les résines constituent les composants principaux, elles apportent l'essentiel des propriétés physicochimiques et mécaniques. Elles font partie de familles chimiques très variées : alkydes, acryliques, époxydiques, nitrocellulosiques, polyesters, polyuréthannes, silicones, aminoplastes, etc...

Les pigments et charges servent à donner la coloration au film et contribuent à renforcer les propriétés chimiques et mécaniques. Ils sont d'origine minérale ou organique et appartiennent à des familles chimiques très diverses : les oxydes, les chromates, les sulfochromates, les sulfures, les séléniures, les phtalocyanines, les thioindigos, les dioxazines, etc.

Les solvants servent à fluidifier le mélange de résines et de pigments; ils facilitent la fabrication et permettent de transporter les éléments essentiels qui constituent les peintures, les vernis, les encres et adhésifs, les résines et pigments, du lieu de fabrication à l'élément à protéger, à décorer, à imprimer ou à coller. Le solvant disparaît après évaporation.

Les additifs ont des rôles divers, qui vont de l'assitance à la dispersion des pigments dans la résine, à la suppression des phénomènes de flottation, de flottaison, de sédimentation en passant par la modification de la brillance, de la résistance à la rayure des feuils, etc... Leur nombre est infini, leur rôle et leur mécanisme d'efficacité sont souvent mal connus et l'empirisme règne souvent dans leur utilisation.

Les peintures, les vernis, les encres et les adhésifs se fabriquent selon plusieurs modes.

Le mode le plus répandu consiste à prémélanger l'ensemble des pigments et des charges (il y a en général quatre par formule de teinte) avec une partie des résines et des solvants, puis à disperser, sous un effort mécanique important, les pigments dans la ou les résines. Par ce procédé, il est difficile d'obtenir le même degré de dispersion pour tous les pigments mis en oeuvre pour un travail donné. En effet, un oxyde de titane ou un oxyde de fer jaune va demander un travail très faible alors qu'un noir de carbone ou un bleu de phtalocyanine va demander un travail très important pour obtenir un degré de dispersion suffisant. De plus, il y aura un risque de dégradation des pigments fragiles, comme dans le cas de l'oxyde de fer jaune.

La dispersion des pigments étant obtenue, la formulation est complétée par l'adjonction de résines et de solvants pour obtenir les propriétés physico-chimiques et la consistance désirées. La teinte est ajustée par l'adjonction soit de bases monopigmentaires de même composition ou contenant au moins la même

résine que la peinture, soit de concentrés monopigmentaires dits universels qui sont constitutés de pigments dispersés dans un mélange de glycols, de tensio-actifs, d'additifs divers et parfois d'eau.

Ces concentrés pigmentaires dits universels, grâce aux glycols, (monoéthylèneglycol, propylèneglycol, butanediol-1,2 et -1,3 etc...) sont miscibles à l'eau des peintures dont la ou les résines sont en émulsion et avec les solvants des peintures dont la ou les résines sont en solution. Les tensio-actifs permettent le mouillage, la dispersion et la stabilisation des pigments.

Les constituants de ces concentrés pigmentaires perturbent les propriétés des peintures : séchage, régularité et uniformité des teintes, rhéologie, aspect, etc...

De ce fait, le taux d'utilisation de ces concentrés est faible et se limite au total à 4 ou 6 pour cent en volume.

Ce premier mode de fabrication conduit à des délais longs et à une prolifération des stocks de matières premières de semi-finis et produits finis chez le fabricant et ses distributeurs. L'étape la plus longue et la plus coûteuse est la dispersion des pigments et la mise à la teinte des peintures et encres.

Un second mode de fabrication permet de réduire les temps de mise à la disposition des produits finis en préparant à l'avance des concentrés monopigmentaires spécifiques à une famille chimique.

On définit un concentré pigmentaire comme étant le mélange intime d'un pigment, un liquide composé habituellement d'un ou plusieurs solvants, d'un ou plusieurs polymères, d'un ou plusieurs additifs et éventuellement d'une ou plusieurs matières de charge. Il confère au produit fini ses propriétés optiques : couleur et opacité.

Les concentrés pigmentaires sont utilisés pour fabriquer une peinture, un vernis, une encre ou un adhésif par mélange entre eux et par déconcentration, au dernier moment, par une base de peinture, de vernis, d'encre ou d'adhésif.

On définit une base comme étant le mélange intime de polymères, de solvants, de matières de charge, d'additifs et éventuellement d'un ou plusieurs pigments. Elle confère au produit fini ses propriétés physicochimiques et mécaniques.

Le principe de fabrication des peintures, vernis, encres et adhésifs, par mélange de concentrés pigmentaires et déconcentration par une base, permet la fabrication dans l'usine du fabricant ou dans le circuit de distribution (grossistes, détaillants) ou même sur le lieu d'utilisation.

Ce procédé de fabrication est très intéressant puisqu'il permet par simple mélange de concentrés pigmentaires et d'une base d'obtenir très rapidement toute quantité de peinture à une teinte déterminée.

Les concentrés dits universels actuellement disponibles sur le marché ne sont pas utilisables dans une base de peinture au-delà d'un taux de 4 à 6% en volume ce qui ne permet pas d'obtenir de teintes vives.

L'utilisation de concentrés pigmentaires spécifiques à une famille chimique oblige à multiplier le nombre de concentrés pigmentaires par le nombre de familles chimiques commercialisées par la firme de peintures, de vernis, d'encres et d'adhésifs. C'est ce qui, jusqu'à présent, a limité le développement de la fabrication des peintures, vernis, encres et adhésifs par ce procédé de fabrication.

On a maintenant découvert de nouveaux véhicules pour concentrés pigmentaires riches en pigment, fluides, homogènes et compatibles avec toutes les peintures, tous les vernis, toutes les encres et tous les adhésifs. Riche en pigment signifie que la quantité pondérale relative de pigment est la plus grande possible : au moins 60 pour cent pour les pigments minéraux et au moins 20 pour cent pour les pigments organiques. Le concentré pigmentaire est fluide pour être aisément manipulable. Il est également homogène pour son dosage donc sans bulles ni mousses. Par "compatible avec toutes les peintures, les vernis, les encres et les adhésifs", on entend aussi bien ceux du grand public que ceux des professionnels ou de l'industrie, en phase aqueuse ou organique, séchant à l'air ou au four, dont les polymères peuvent être de toutes natures chimiques : acryliques, vinyliques, glycérophtaliques, élastomériques, époxydiques, polyuréthannes, aminés, amides, cellulosiques, cette liste n'étant pas limitative. Il est stable et ne présente donc ni décantation ni synérèse. Le pigment ne se réaglomère pas et ne flocule pas.

D'autres avantages des véhicules et concentrés pigmentaires selon l'invention peuvent être mentionnés : gamme d'utilisation élargie aux peintures anticorrosion et de l'industrie, obtention de tons plus profonds et plus frais, développement optimal de la force colorante, augmentation de l'opacité des feuils; ces concentrés ne changent pas la viscosité des peintures, vernis, encres et adhésifs, ne moussent pas au moment de l'utilisation et de la fabrication, se mélangent facilement aux bases de peintures, de vernis, d'encres et d'adhésifs, et suppriment l'utilisation d'additifs divers.

La présente invention a donc pour objet un véhicule pour concentrés pigmentaires compatibles avec tous les peintures, vernis, encres et adhésifs, caractérisé en ce qu'il est constitué par au moins un télomère ou cotélomère d'un ou plusieurs monomères acryliques et d'un télogène, de formule générale

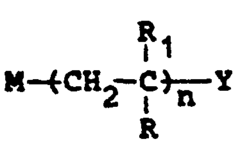 . I

dans laquelle
R représente un groupe carboxy ou ses esters de formule $-COOR_2$, un groupe carbamoyle ou cyano,
$R_1$ représente un atome d'hydrogène ou un groupe méthyle,
$R_2$ représente un atome d'hydrogène, un groupe alkyle linéaire ou ramifié de 2 à 50 atomes de carbone pouvant porter un ou plusieurs substituants hydroxy ou halogène, un groupe alcényle linéaire ou ramifié de 2 à 50 atomes de carbone, un groupe cycloalkyle de 3 à 8 atomes de carbone ou cycloalkyl(en $C_3$-$C_8$)-alkyle (en $C_1$-$C_{12}$) pouvant porter des substituants alkyle en $C_1$-à $C_6$, un groupe aryle ou aralkyle de 6 à 50 atomes de carbone pouvant porter des substituants alkyle en $C_1$ à $C_6$ ou halogène, un groupe dialkyl (en $C_1$-$C_3$)-aminoalkyle (en $C_1$-$C_{20}$), un groupe oxyéthyléné de formule $C_2H_4$-$(OC_2H_4)_m$-$OC_2H_5$ avec 1 m 50, ou un groupe époxydé de formule

$$-(CH_2)_p-(\underset{\diagdown O \diagup}{CH-CH})_q-(CH_2)_r-CH_3 \quad \textbf{avec}$$

$0 \leq p \leq 12$, $1 \leq q \leq 10$ et $0 \leq r \leq 10$, $R_1$ et $R_2$ ne pouvant représenter simultanément l'hydrogène,
n est un nombre entier allant de 2 à 50, et
M et Y représentent les deux parties de la molécule du télogène dissocié.

Les véhicules selon l'invention sont des oligomères acryliques ou méthacryliques, préparés par télomérisation en solution, et dont la longueur de chaîne est ajustée par la présence d'agents de transfert divers dans le milieu réactionnel. On recherche des longueurs de chaîne telles que l'on obtienne des oligomères liquides ou pâteux présentant une bonne solubilité dans les solvants usuels. Tous les groupements réactifs sont liés par des liaisons covalentes.

La télomérisation est définie comme le procédé consistant à mettre en réaction, dans les conditions de polymérisation, une ou plusieurs molécules d'un composé polymérisable appelé taxogène (A) et une molécule (M-Y) appelée télogène. Les produits de la réaction du type M-(A)n-Y sont appelés télomères. Dans le cas où l'on utilise simultanément au moins deux taxogènes (A) et (B) la réaction est appelée cotélomérisation et les produits obtenus du type M- (A)n-(B)n' Y des cotélomères. Les taxogènes utilisés selon l'invention sont les monomères acryliques ou méthacryliques de formule $CH_2 = CRR_1$, R et $R_1$ étant comme dans la formule générale I.

On préfère selon l'invention les acrylates et méthacrylates de formule I dans laquelle $R_2$ est un groupe éthyle, lauryle, hydroxyéthyle, hydroxypropyle, hydroxybutyle, dibromopropyle, un groupe alcényle dérivé des acides linoléïque, palmitoléïque ou oléïque, cyclohexyle, tert-butyl-cyclohexyle, phénéthyle, diméthylaminoéthyle, diéthylaminoéthyle, diméthylaminonéopentyle, éthoxy-éthoxyéthyle ou glycidyle.

Les télogènes MY utilisés selon l'invention sont classés en deux familles principales selon que la réaction de télomérisation est menée par voie radicalaire ou par voie rédox.

La famille des télogènes utilisables dans les télomérisations radicalaires se décompose en 3 sous-familles : les mercaptans, les phosphites et les composés à iode terminal.

1. La formule générale des mercaptans est R'-S-H, la partie M du télogène MY représentant R'-S et la partie Y représentant l'hydrogène.
R' représente en particulier des groupements suivants :
- un radical hydrocarboné aliphatique linéaire ou ramifié de 1 à 18 atomes de carbone, notamment n-octyle, tertio-nonyle, n-dodécyle et hexadécyle ;
- un radical cycloaliphatique de 3 à 8 atomes de carbone, aryle ou aralkyle de 6 à 13 atomes de carbone, notamment cyclohexyle ou benzyle,
- un groupe carboxyalkyle(en $C_1$-$C_6$), notamment carboxyméthyle,
- un groupe hydroxyalkyle(en $C_1$-$C_6$), notamment 2-hydroxyéthyle ou 3-hydroxypropyle,
- un groupe alcoxy(en $C_1$-$C_6$) alkyle(en $C_1$-$C_6$), notamment 2-éthoxyéthyle,
- un groupe alcoxy(en $C_1$-$C_6$) carboxyalkyle(en $C_1$-$C_6$), notamment 2-méthoxycarbonyléthyle,
- un groupe hétérocyclique azoté de 5 à 7 atomes de carbone, notamment imidazolinyle,
- un groupe mercaptoaliphatique ou -cycloaliphatique de 1 à 20 atomes de carbone (c'est à dire la famille des di-mercaptans de formule générale H-S-R'-S-H), notamment mercaptoéthyle, un radical dérivant du mercaptolimonène, ou mercapto-éthylecyclohexyle.

2. Les phosphites utilisables sont notamment les phosphites de dialkyle (en $C_1$ à $C_{18}$),
la partie M du télogène MY représentant le radical dialkylphosphite et la partie Y représentant l'atome d'hydrogène.
Dans cette famille, on préfère les diméthyl, diéthyl, dipropyl et dibutylphosphites.

3. La formule générale des composés à iode terminal est R"I, la partie M du télogène MY correspondant à R" et la partie Y représente I. R" représente un radical hydrocarboné aliphatique linéaire ou ramifié de 1 à 50 atomes de carbone, pouvant porter des substituants halogénés, de préférence les radicaux méthyle, éthyle, propyle, butyle, perfluoroéthyle ou perfluoro-n-hexyle.

La famille des télogènes MY utilisables dans les télomères du type rédox est composée de corps pour lesquels Y représente un atome d'hydrogène, de chlore ou de brome et M est un groupement organique électroattracteur.

Avantageusement M peut être choisi parmi les groupements électroattracteurs suivants :

$-CCl_3, -PO(OR_5)_2, -P(R_5)_2, -CCl_2\ CO_2R_5,\ -CCl_2-(CH_2-$
$\underset{|}{C}R_5)_s-Cl,$
$CO_2R_5$
$-CCl_2-(CH_2-\underset{|}{C}H)_s-Cl, -CCl_2-(CH_2-\underset{|}{C}H)_s-X$
$CN \qquad\qquad C_6H_5$
$-CCl_2-(CH_2-CHCl)_s-X, -CCl_2-(CH_2-CCl_2)_s-Cl, -CCl_2-(CF_2-CF$
$Z)_s-X,$ et
$-CCl_2-(CH_2-\underset{|}{C}\ CH-CH_2)_s-X$
$R_6$

dans lesquels s représente un nombre entier allant de 1 à 10,
$R_5$ est un atome d'hydrogène ou un groupe alkyle de 1 à 12 atomes de carbone,
$R_6$ est un atome d'hydrogène ou un groupe méthyle,
Z est un atome de chlore ou de fluor,
X est un atome de chlore ou d'hydrogène.

Une famille préférée de télomères MY est celle dans laquelle :
- Y représente le chlore
- M est choisi parmi les groupements $-CCl_3$,$-CCl_2-CF_3$,$-CCl_2-COOCH_3$,$-CCl_2-CH_2-CHCl-COOCH_3$,$-CCl_2-(CH_2-CFZ)_s-Cl$ ou s est 1, 2 ou 3 et Z représente un atome de chlore ou de fluor.

Une autre famille préférée de télomères est celle dans laquelle
- Y représente un atome d'hydrogène ou de brome et
- M représente l'un des groupements $-CCl_3$ ou $PO(OC_2\text{-}H_5)_2$.

Les réactions de télomérisation sont effectuées en solution dans les solvants organiques classiques. On les choisit de façon à ce que les monomères, télogènes et initiateurs soient solubles à la température de réaction. Dans le cas où on laisse le télomère en solution dans le solvant de réaction, on préfère ceux qui peuvent être utilisés sans inconvénient dans les concentrés pigmentaires. Les températures de réaction peuvent être très variables, en particulier de 50°C à 150°C, et dépendent essentiellement de la nature de l'initiateur et de la réactivité des monomères et télogènes.

Pour les réactions de télomérisation par voie rédox, on utilise de préférence le mélange trichlorure ferrique et benzoïne à concentrations molaires égales et voisines de 0,2 mole/litre. Les réacteurs ne peuvent pas être en acier.

Pour les réactions de télomérisation par voie radicalaire, on utilise soit des initiateurs azoïques, par exemple l'azo-bis-isobutyronitrile, soit des péroxydes, par exemple le péroxyde de benzoyle. Dans certains cas, on initie la réaction avec le péroxyde de benzoyle et on poursuit la catalyse avec l'azo-bis-isobutyronitrile.

L'invention concerne aussi de nouveaux concentrés pigmentaires qui sont constitués de façon différente de ceux fabriqués jusqu'à présent. Chacun contient un pigment, un véhicule tel que défini ci-dessus et un ou plusieurs solvants. Par pigment, on entend tous les corps colorés insolubles utilisés habituellement dans les peintures, vernis, encres et adhésifs : oxydes de titane, oxydes de fer, phtalocyanines, hansa, etc; ainsi que les matières de charges minérales incolores : carbonates de calcium, talcs, kaolins, silices, cette liste n'étant pas limitative. Le véhicule qui est un télomère ou un mélange de télomères en solution ou non permet le mouillage, la dispersion, la stabilisation et le bon développement coloristique de tous les pigments et matières de charge usuels et compatibles avec toutes les bases de peintures, de vernis et d'encres et d'adhésifs usuels. Les solvants sont ceux qui sont habituellement utilisés dans les peintures, encres, vernis et adhésifs : hydrocarbures, esters, cétones alcools, glycols, eau, solvants nitrés, chlorés, ou à hétéroatomes, cette liste n'étant pas limitative.

La teneur en pigment de ces nouveaux concentrés est de 10 à 90% en poids pour les pigments minéraux, et plus particulièrement de 60 à 80%; de 10 à 60 % en poids pour les pigments organiques, et plus particulièrement de 20 à 50%. La proportion du véhicule peut être de 1 à 50% en poids et plus particulièrement entre 5 et 25%. Les matières de charges peuvent être comprises entre 0 et 50% et les solvants entre 10 et 70%.

Le mode d'action des nouveaux concentrés pigmentaires est très différent de celui des concentrés pigmentaires classiques. En effet, ces derniers ne se mélangent que très difficilement aux bases du fait

de leur faible compatibilité. La plupart du temps, ils sont simplement émulsifiés dans la base, par l'action mécanique du mélange. C'est le cas par exemple dans les bases glycérophtaliques dont le solvant est du white spirit. Dans ces conditions, il se produit aux interfaces entre base et concentré des migrations de mouillants et dispersants qui destabilisent soit le concentré pigmentaire (floculation, perte de force colorante et d'opacité), soit la base (modification de rhéologie, de séchage, de stabilité et de propriétés mécaniques). En revanche, les concentrés pigmentaires selon l'invention sont totalement miscibles aux bases de toutes matures. Ils se mélangent intimement pour former une phase complètement homogène. Il n'y a ni dispersant, ni mouillant pour migrer au moment du mélange de la base avec le concentré pigmentaire, donc aucune source de déstabilisation de l'un ou de l'autre. Par sa très large compatibilité, le véhicule maintient les pigments à l'état finement divisé et reste neutre vis-à-vis des polymères, solvants et additifs des bases. Le véhicule ne migre pas parce qu'il est fixé sur le pigment par des groupements chimiques dont l'affinité est grande pour le pigment. Contrairement aux mouillants et dispersants qui sont généralement des petites molécules donc très mobiles puisque leur masse moléculaire est inférieure à 1.000 dalton par mole, le véhicule selon l'invention possède des masses moléculaires d'au moins environ 1.000 dalton et jusqu'à environ 10.000 dalton par mole. Le véhicule est neutre vis-à-vis des constituants des bases parce qu'il possède suffisamment de groupements chimiques pour présenter une affinité équilibrée.

Les exemples non limitatifs suivants illustrent la synthèse du véhicule selon l'invention.

Exemple 1 :

Véhicule n° 1 : Télomérisation radiculaire de l'acrylate de butyle avec l'acide thioglycolique dans l'hexylèneglycol.

Toutes les matières utilisées sont de provenance industrielle et ne sont pas purifiées.

La réaction a lieu dans un réacteur en acier inoxydable de 2 litres équipé d'une agitation efficace, d'un réfrigérant, d'une sonde de température reliée à une régulation de température, d'un barbotage d'azote et de deux pompes volumétriques réglables.

Pour former le pied de cuve, on introduit dans le réacteur 836 $cm^3$ d'hexylèneglycol et 128,2 g d'acrylate de butyle qui sont mélangés, dégazés par barbotage d'azote et portés à 80°C. Lorsque la température est atteinte on introduit 26,3 g d'acide thioglycolique (télogène) et 0,820 g d'azo-bis-isobutyronitrile (A.I.B.N.). A cet instant, les concentrations sont de 1 mole/l pour le monomère, 0,286 mole/l pour le télogène et 0,005 mole/l pour l'initiateur.

La température est maintenue à 80°C tout au long de la réaction.

On maintient constantes les concentrations en réactifs en introduisant en continu par pompage de l'acrylate de butyle à raison de 5,19 $cm^3$/mn et un mélange d'acide thioglycolique et d'A.I.B.N. à raison de 0,372 $cm^3$/mn d'acide thioglycolique et de 0,0062 g/mn d'A.I.B.N.

Après 2 heures de réaction, l'extrait sec en poids théorique étant 50%, on arrête l'addition des composantes de la télomérisation et on termine la réaction des réactifs résiduels en introduisant 0,820 g d'A.I.B.N. et en maintenant la température à 80°C pendant 2 heures.

La réaction est suivie par dosage des réactifs et du télomère formé dans les échantillons prélevés toutes les 15 mn. L'acrylate de butyle est dosé par mesure quantitative de spectroscopie infrarouge de la double liaison. L'acide thioglycolique est dosé par iodométrie réductrice du groupement mercaptan. La quantité de télomère formé est mesurée par thermogravimétrie. A la fin de la réaction on obtient 1545 g du télomère en solution dans l'hexylène glycol et on vérifie la quasi-disparition des réactifs : 0,1% d'acrylate de butyle et 0,05% d'acide thioglycolique.

Le télomère formé représente 49,8% en poids du mélange.

On mesure la viscosité cinématique du télomère après avoir ramené très précisément son extrait sec à 40% en poids, par dilution à froid avec de l'hexylène glycol. La mesure est effectuée à la température de 30°C à l'aide d'un viscosimètre à tube capillaire du type UBBELOHDE. La viscosité cinématique exprimée en centistokes (cst) est directement corrélée avec le volume hydrodynamique de la molécule.

On obtient ici une viscosité de 50,0 cst ($50x10^{-6}$ $m^2/s$).

Exemple 2 :

Véhicule n° 2 : Télomérisation radicalaire de l'acrylate d'éthyldiglycol (acrylate de 2-(2-éthoxy-éthoxy)-éthyle.) (A.E.D.G.) avec le n-dodécylmercaptan (N.D.M.) dans l'hexylèneglycol.

Le mode opératoire de la réaction est idetique à celui de l'exemple 1 :

Le pied de cuve est constitué de 744 $cm^3$ d'hexylèneglycol, de 188 g d'A.E.D.G. (1 mole/l), de 57,714 g de N.D.M. (0,286 mole/l) et de 0,820 g de A.I.B.N. (0,005 mole/l).

Les ajouts sont réalisés par pompage pendant 56 mn, à raison de 6,80 $cm^3$/mn de N.D.M. et de 0,0062 g/mn d'A.I.B.N.

Après 56 mn de réaction à 80°C, on stoppe les ajouts, on introduit 0,820 g d'A.I.B.N. et on maintient la température 2 heures à 80°C.

La réaction est suivie de la même façon que dans l'exemple n° 1 : dosages de l'A.E.D.G. par infrarouge, du N.D.M. par iodométrie et du télomère par thermogravimétrie.

En fin de réaction, on obtient 1374 g de télomère en solution dans l'hexylèneglycol. Il reste 0,1% d'A.E.D.G. et 0,05 % de N.D.M. Le télomère représente 49,9% en poids du mélange.

La viscosité cinématique du télomère dont l'extrait sec est ramené à 40% en poids avec de l'hexylène glycol est $29,0 \times 10^{-6}$ $m^2/s$.

Exemple 3 :

Véhicule n° 3 : Mélange du véhicule n° 1 et du véhicule n° 2 selon les proportions 2/3, 1/3.

La viscosité cinématique du mélange dont l'extrait sec est ramené à 40% en poids avec de l'hexylène glycol est $42,0 \times 10^{-6}$ $m^2/s$.

Exemple 4 :

Véhicule n° 4 : Cotélomérisation radicalaire de l'acrylate de butyle (A.Bu.) et de l'acrylate d'éthyldiglycol (A.E.D.G.) avec l'acide thioglycolique (A.T.G.) dans l'hexylèneglycol.

Le mode opératoire de la réaction est identique à celui des exemples 1 et 2.

Le pied de cuve est constitué de 90 $cm^3$ d'hexylèneglycol, de 64,1 g d'A.Bu. (0,5 mole/l), de 94 g d'A.E.D.G. (0,5 mole/l), de 26,3 g d'A.T.G. (0,286 mole/l) et de 0,820 g d'A.I.B.N. (0,005 mole/l).

Les ajouts sont réalisés par pompage pendant 88 minutes à raison de 7,08 $cm^3$/mn d'A.Bu., de 4,33 $cm^3$/mn d'A.T.G. et de 0,0062 g/mn d'A.I.B.N.

Après 88 mn de réaction à 80°C, on stoppe les ajouts et on introduit 0,820 g d'A.I.B.N. et on maintient la température 2 h à 80°C.

La réaction est suivie de la même façon que dans les exemples 1 et 2 : dosages de l'A.Bu. et de l'A.E.D.G. par infrarouge, de l'A.T.G. par iodométrie et du télomère par thermogravimétrie.

En fin de réaction, on obtient 1460 g de télomère en solution dans l'hexylèneglycol. Il reste 0,1% d'A.E.D.G., 0% d'A.Bu. et 0,05% d'A.T.G. Le télomère formé représente 49,8% en poids du mélange.

La viscosité cinématique du mélange dont l'extrait sec est ramené à 40% en poids avec de l'hexylène glycol est $45,0 \times 10^{-6}$ $m^2/s$.

Exemple 5 :

Vehicule n° 5 : Télomérisation radicalaire de l'acrylate d'éthylèneglycol (acrylate de 2-hydroxyéthyle.) (A.E.G.) avec le bis-mercapto-éthanol dans le propylèneglycol.

Le mode opératoire et le suivi de la réaction sont identiques à ceux des exemples 1, 2 et 4. Les réactifs sont :
Solvant : propylèneglycol
Monomère : acrylate d'éthylèneglycol
Télogène : bis-mercapto-éthanol
Initiateur: A.I.B.N.

On obtient 1300 g d'une solution dans le propylèneglycol contenant 49,9 g de télomère, 0,1% d'A.E.G. et 0,05% de B.M.E.

La viscosité cinématique du télomère dont l'extrait sec est ramené à 40% en poids avec du propylène glycol est $110,0 \times 10^{-6}$ $m^2/s$.

Exemple 6 :

Véhicule n° 6 : Télomérisation radicalaire du méthacrylate de glycidyle (M.A.G.) avec le n-dodécyl-mercaptan (N.D.M.) dans le diacétone-alcool.

Le mode opératoire et le suivi de la réaction sont identiques à ceux des exemples 1, 2, 4 et 5. Les réactifs sont :
Solvant : diacétone alcool (D.A.A.)
Monomère : méthacrylate de glycidyle
Télogène : n-dodécyl-mercaptan

Initiateur: A.I.B.N.

On obtient 1078 g d'une solution dans le D.A.A. contenant 49,8 % de télomère, 0,2% de M.A.G. et 0,05% de N.D.M.

La viscosité cinématique du télomère dont l'extrait sec est ramené à 40% en poids avec du diacétone-alcool est $31,0 \times 10^{-6}$ $m^2/s$.

Exemple 7 :

Véhicule n° 7 : Télomérisation radicalaire de l'acrylate d'éthyldiglycol (A.E.D.G.) avec le n-dodécyl-mercaptan (N.D.M.) dans le diacétone-alcool (D.A.A.).

Le mode opératoire et le suivi de la réaction sont identiques à ceux des exemples 1, 2, 4, 5 et 6. Les réactifs sont :
Solvant : D.A.A.
Monomère : A.E.D.G.
Télogène : N.D.M.
Initiateur : A.I.B.N.

On obtient 992 g d'une solution dans le D.A.A. contenant 49,9 % de télomère, 0,1% d'A.E.D.G. et 0,05% de N.D.M.

La viscosité cinématique du télomère dont l'extrait sec est ramené à 40% en poids avec du diacétone-alcool est $26,0 \times 10^{-6}$ $m^2/s$.

Exemple 8 :

Vehicule n° 8 : Télomérisation radicalaire de l'acrylate d'éthylèneglycol (A.E.G.) avec le n-dodécylmercaptan (N.D.M.) dans le diacétone-alcool (D.A.A.).

Le mode opératoire et le suivi de la réaction sont identiques à ceux des exemples 1, 2, 4, 5, 6 et 7. Les réactifs sont :
Solvant : D.A.A.
Télomère : A.E.G.
Télogène : N.D.M.
Initiateur : A.I.B.N.

On obtient 1082 g d'une solution dans le D.D.A. contenant 49,8% de télomère, 0,2% de A.E.G. et 0,05% de N.D.M.

La viscosité cinématique du télomère dont l'extrait sec est ramené à 40% en poids avec du diacétone-alcool est $70,0 \times 10^{-6}$ $m^2/s$.

Exemple 9 :

Véhicule n° 9 : Cotélomérisation radicalaire de l'acrylate d'éthylèneglycol (A.E.G.), de l'acrylate d'éthylène-diglycol (A.E.D.G.), du méthacrylate de glycidyle (M.A.G.) avec le n-dodécyl-mercaptan (N.D.M.), dans le diacétone-alcool (D.A.A.).

Le mode opératoire et le suivi de la réaction sont identiques à ceux des exemples 1, 2, 4, 5, 6, 7 et 8. Les réactifs sont :
Solvant : D.A.A.
Monomère : 1/3 A.E.D.G., 1/3 A.E.G., 1/3 M.A.G.
Télogène : N.D.M.
Initiateur : A.I.B.N.

On obtient 1232 g d'une solution dans le D.A.A. contenant 49,8% de télomère, 0,2% de M.A.G., 0% d'A.E.D.G., 0% d'A.E.G., 0,05% de N.D.M.

Exemple 10 :

Véhicule n° 10 : Télomérisation radicalaire de l'acrylate d'éthyl-diglycol (A.E.D.G.) avec l'iodure d'hexyle perfluoré $C_6F_{13}I$ dans l'éthylglycol (E.G.) éther monoéthylique de l'éthylène glycol.

Le mode opératoire et le suivi de la réaction sont identiques à ceux des exemples 1, 2, 4, 5, 6, 7, 8 et 9. Les réactifs sont :
Solvant : E.G.

Monomère : A.E.D.G.
Télogène : $C_6F_{13}I$
Initiateur : A.I.B.N.
On obtient 1005 g d'une solution dans E.G. contenant 49,9 % de télomère, 0,1 % d'A.E.D.G. et 0% de $C_6F_{13}I$.

Exemple 11 :

Véhicule n° 11 : Télomérisation radicalaire en deux étapes dans l'hexylèneglycol (H.G.) de l'acide méthylacrylique (A.M.A.) avec la 1ère fonction thiol de l'éthane-dithiol (E.D.T.) puis de l'acrylate de butyle (A.Bu.) avec la 2ème fonction thiol de l'E.D.T..

1ère étape :

Le mode opératoire et le suivi de la réaction sont identiques à ceux des exemples 1, 2 et 4 à 10. Les réactifs sont :
Solvant : H.G.
Monomère : A.M.A.
Télogène : E.D.T.
Initiateur : A.I.B.N.
On obtient 750 g d'une solution dans H.G. contenant 28% de télomère, 0,1% d'A.A. et 0% de E.D.T.

2ème étape :

Dans le même réacteur contenant les 750 g de solution ci-dessus, on applique le même mode opératoire que dans la première étape. Les réactifs sont :
Solvant : H.G.
Monomère : A.Bu.
Télogène : télomère de l'étape 1 portant une fonction thiol
Initiateur : A.I.B.N.
On obtient 1200 g d'une solution dans H.G. contenant 50% de télomère et 0% d'A.Bu.

Exemple 12 :

Véhicule n° 12 : Télomérisation rédox de l'acide méthacrylique (A.M.A.) avec le tétrachlorure de carbone (T.C.) dans l'hexylèneglycol (H.G.).

Toutes les matière utilisées sont de provenance industrielle et ne sont pas purifiées.
La réaction a lieu dans un réacteur en verre de 2 litres équipé d'une agitation, d'un réfrigérant, d'une sonde de température reliée à une régulation de température, d'un barbotage d'azote et de deux pompes volumétriques réglables.
Le mode opératoire et le suivi de la réaction sont identiques à celui de l'exemple 1. Les réactifs sont :
Solvant : H.G.
Monomère : A.M.A.
Télogène : T.C.C.
Initiateur : chlorure ferrique 0,195 mole/l et benzoïne 0,195 mole/l.
On obtient 975 g d'une solution dans H.G. contenant 50% de télomère, 0% de T.C.C.

Exemple 13 :

Véhicule n° 13 : Télomérisation rédox de l'acrylate d'éthyl-diglycol (A.E.D.G.) avec le diéthyl phosphite (D.E.P.) dans l'acétate de butyle.

Le mode opératoire et le suivi de la réaction sont identiques à celui de l'exemple 12. Les réactifs sont :
Solvant : Acétate de butyle
Monomère : A.E.D.G.
Télogène : D.E.P.
Initiateur : chlorure ferrique et benzoïne.
On obtient 1354 g d'une solution dans l'acétate de butyle contenant 49,6 % de télomère, 0,2 % d'A.E.D.G. et 0,2 % de D.E.P.

Exemple 14 :

Vehicule n° 14 : Cotélomérisaiton radicalaire de l'acrylate de Butyle (ABu) et du méthacrylate de glycidyle (M.A.G.) avec le n-dodécyl-mercaptan (N.D.M.), dans l'acétate de butyle (Ac.Bu).

Le mode opératoire et le suivi de la réaction sont identiques à ceux des exemples 1, 2, 4, 5, 6, 7, 8, 9, 10. Les réactifs sont :
Solvant : Ac. Bu
Monomère : 4/5 ABu, 1/5 M.A.G.
Télogène : N.D.M.
Initiateur : A.I.B.N.

On obtient 1200 g d'une solution dans l'Ac. Bu contenant 50,0 % de télomère, 0 % d'ABu, 0 % de M.A.G. 0 % de N.D.M. La viscosité cinématique du télomère dont l'extrait sec est ramené à 40 % en poids avec l'acétate de butyle est $152,0 x 10^{-6}$ $m^2/s$.

Exemple 15 :

Véhicule n° 15 : Cotélomérisation de l'acrylate de butyle (ABu) et du diméthyl-amino éthyl acrylate (D.M.A.E.A.) avec le n-dodécyl-mercaptan (N.D.M.) dans l'acétate de butyle (Ac Bu).

Le mode opératoire et le suivi de la réaction sont identiques à ceux des exemples 1, 2, 4, 5, 6, 7, 8, 9, 10, 14.
Solvant : Ac. Bu
Monomère : 4/5 Abu, 1/5 D.M.A.E.A.
Télogène : N.D.M.
Initiateur : A.I.B.N.

On obtient 1195 g d'une solution dans l'acétate de butyle contenant 49,7 % de télomère, 0,2% de ABu, 0 % de D.M.A.E.A. et 0,1 % de N.D.M. La viscosité cinématique du télomère dont l'extrait sec est ramené à 40 % en poids avec l'acétate de butyle est $202 x 10^{-6}$ $m^2/s$.

Chaque véhicule est caractérisé par une analyse chromatographique par perméation de gel donnant les masses moléculaires moyennes en nombre et en poids. Le rapport des deux masses, appelé polydispersité, indique la répartition plus ou moins large des masses moléculaires. Plus la répartition des masses est étroites, plus la polydispersité est proche de 1,00. La distribution des masses suit une loi gaussienne. Les résultats sont rassemblés dans le tableau I ci-après.

Les spectographies par infrarouge et R.M.N. du proton des télomères permettent de vérifier la conformité de la formule du télomère obtenu avec celle qui est attendue. On trouve dans tous les cas les signaux correspondants aux fonctions caractéristiques.

Les viscosités cinématiques sont mesurées après avoir ramené l'extrait sec en poids du télomère avec le solvant de la réaction.

**TABLEAU I**

| EXEMPLES N° | MONOMERES. n° 1 | MONOMERES. n° 2 | MONOMERES. n° 3 | TELOGENE | SOLVANT | EXTRAIT SEC | DENSITE | CHROMATOGRAPHIE PERMEATION GEL: MASSE EN NOMBRE mole | CHROMATOGRAPHIE PERMEATION GEL: MASSE EN POIDS g/mole | CHROMATOGRAPHIE PERMEATION GEL: POLY-DISPERSITE | Viscosité cinématique $10^{-6} m^2/s$ |
|---|---|---|---|---|---|---|---|---|---|---|---|
| 1 | A.Bu. | - | - | A.T.G. | H.G. | 49,8 | 0,987 | 851 | 988 | 1,16 | 50,0 |
| 2 | A.E.D.G. | - | - | N.D.M. | H.G. | 49,9 | 0,984 | 1276 | 1518 | 1,19 | 29,0 |
| 3 | MELANGE | 1 + 2 2/3 | 1/3 | ——— | ——— | 49,8 | 0,985 | ——— | ——— | ——— | 42,0 |
| 4 | A.Bu. | A.E.D.G. | - | A.T.G. | H.G. | 49,8 | 0,986 | 974 | 1198 | 1,23 | 45,0 |
| 5 | A.E.G. | - | - | B.M.E. | P.G. | 49,9 | 1,070 | 1125 | 1238 | 1,10 | 110,0 |
| 6 | M.A.G. | - | - | N.D.M. | D.A.A. | 49,8 | 0,991 | 1488 | 1622 | 1,09 | 31,0 |
| 7 | A.E.D.G. | - | - | N.D.M. | D.A.A. | 49,9 | 0,993 | 1842 | 2082 | 1,13 | 26,0 |
| 8 | A.E.G. | - | - | N.D.M. | D.A.A. | 49,8 | 0,989 | 1238 | 1362 | 1,10 | 70,0 |
| 9 | A.E.G. | A.E.D.G. | M.A.G. | N.D.M. | D.A.A. | 49,8 | 0,991 | 1299 | 1689 | 1,30 | 57,0 |
| 10 | A.E.D.G. | | | $C_6F_{13}I$ | E.G. | 49,9 | 1,300 | 2023 | 2326 | 1,15 | 17,0 |
| 11 | A | A.Bu. | | E.D.T. | H.G. | 50,0 | 0,980 | 1643 | 2124 | 1,25 | 84,0 |
| 12 | A.M.A. | - | - | T.C.C. benzoïne | H.G. | 50,0 | 0,986 | 1061 | 1114 | 1,05 | 33,0 |
| 13 | A.E.D.G. | | | D.E.P. | Ac.Bu. | 49,6 | 0,996 | 1998 | 2118 | 1,06 | 35,0 |
| 14 | ABu | M.A.G. | | D.S.H. | Ac.Bu | 50,0 | 0,990 | 6.70[illegible] | 7,778 | 1,16 | 152 |
| 15 | ABu | D.M.A.E.A. | | D.S.H. | Ac.Bu | 49,7 | 0,992 | 6.600 | 8.250 | 1,25 | 202 |

Exemples d'utilisation des véhicules

Les véhicules synthétisés selon les exemples 1 à 13 précédents sont mis en oeuvre dans les formules de concentrés pigmentaires suivantes, en parties en poids :

| | | | | | | | | | | | | | | |
|---|---|---|---|---|---|---|---|---|---|---|---|---|---|---|
| OXYDE DE TITANE | 70 | 70 | 70 | 75 | | | | | | | | | | |
| OXYDE DE FER JAUNE | | | | | 60 | 60 | 60 | 65 | | | | | | |
| BLEU DE PHTALOCYANINE | | | | | | | | | 20 | 20 | 20 | 30 | | |
| JAUNE DE CHROME | | | | | | | | | | | | | 70 | 70 |
| VEHICULE n° 3 | 10 | | | | 15 | | | | 15 | | | | | |
| VEHICULE n° 4 | | 10 | | | | 15 | | | | 15 | | | | |
| VEHICULE n° 9 | | | 10 | | | | 15 | | | | 15 | | | |
| VEHICULE n° 10 | | | | 10 | | | | 15 | | | | 15 | | |
| VEHICULE • 14 | | | | | | | | | | | | | 20 | |
| VEHICULE n° 15 | | | | | | | | | | | | | | 20 |
| HEXYLENEGLYCOL | 20 | | | | 25 | | | | 65 | | | | | |
| ETHYLENEGLYCOL | | 20 | | | | 25 | | | | 65 | | | | |
| DIACETONE-ALCOOL | | | 20 | | | | 25 | | | | 65 | | | |
| PROPYLENEGLYCOL | | | | 7 | | | | 10 | | | | 25 | | |
| EAU | | | | 8 | | | | 10 | | | | 30 | | |
| ACETATE D'ETHYL GLYCOL | | | | | | | | | | | | | 10 | 10 |

Les concentrés pigmentaires sont fabriqués de la façon suivante :
Dans une cuve on charge sous agitation

| | | | | | | | | | | | | | | |
|---|---|---|---|---|---|---|---|---|---|---|---|---|---|---|
| VEHICULE 3 | 10 | | | | 15 | | | | 15 | | | | | |
| VEHICULE 4 | | 10 | | | | 15 | | | | 15 | | | | |
| VEHICULE 9 | | | 10 | | | | 15 | | | | 15 | | | |
| VEHICULE 10 | | | | 10 | | | | 15 | | | | 15 | | |
| VEHICULE 14 | | | | | | | | | | | | | 20 | |
| VEHICULE 15 | | | | | | | | | | | | | | 20 |
| HEXYLENEGLYCOL | 15 | | | | 20 | | | | 60 | | | | | |
| ETHYLENEGLYCOL | | 15 | | | | 20 | | | | 60 | | | | |
| DIACETONE-ALCOOL | | | 15 | | | | 20 | | | | 60 | | | |
| PROPYLENEGLYCOL | | | | 7 | | | | 10 | | | | 25 | | |
| ACETATE D'ETHYL GLYCOL | | | | | | | | | | | | | 5 | 5 |

On ajoute lentement, sous forte agitation

| | | | | | | | | | | | | | | |
|---|---|---|---|---|---|---|---|---|---|---|---|---|---|---|
| OXYDE DE TITANE | 70 | 70 | 70 | 75 | | | | | | | | | | |
| OXYDE DE FER JAUNE | | | | | 60 | 60 | 60 | 65 | | | | | | |
| BLEU DE PHTALOCYANINE | | | | | | | | | 20 | 20 | 20 | 30 | | |
| JAUNE DE CHROME | | | | | | | | | | | | | 70 | 70 |

On disperse le pigment dans un broyeur à micro-éléments ou dans un broyeur à billes jusqu'à ce que la finesse soit 9 à la jauge de North.

On rince le broyeur par la quantité suivante le solvant

| | | | | | | | | | | | | | | |
|---|---|---|---|---|---|---|---|---|---|---|---|---|---|---|
| HEXYLENEGLYCOL | 5 | | | | 5 | | | | 5 | | | | | |
| ETHYLENEGLYCOL | | 5 | | | | 5 | | | | 5 | | | | |
| DIAÇETONE-ALCOOL | | | 5 | | | | 5 | | | | 5 | | | |
| EAU | | | | 8 | | | | 10 | | | | 30 | | |
| ACETATE D'ETHYL GLYCOL | | | | | | | | | | | | | 5 | 5 |

On homogénéise le concentré sous agitation lente.

Les concentrés pigmentaires obtenus sont homogène, fluides, sans décantation, sans synérèse; la force colorante des pigments est totalement développée; les particules de pigments dans la résine ont une dimension inférieure à 10 micromètres.

Les concentrés pigmentaires après contrôle de leurs caractéristiques physico-chimiques et colométriques sont prêts à l'emploi.

Leur compatibilité avec des peintures de nature chimique différente, a été vérifiée de deux façons :

- l'une a consisté à ajouter 15 % en volume de l'un quelconque des concentrés pigmentaires selon le mode de préparation précédemment décrit, sous agitation, dans les peintures blanches suivantes :

N° 1 Emulsion styrène acrylique en phase aqueuse

N° 2 Glycérophtalique longue en huile
N° 3 Vinyl toluène acrylique
N° 4 Caoutchouc chloré
N° 5 Epoxy polyamine deux composants
N° 6 Polyuréthanne deux composants
N° 7 Nitrocellulose
N° 8 Glycéro court en huile
N° 9 Alkyde mélamine four
N° 10 Acrylique mélamine four

- l'autre consiste à réaliser une teinte déterminée en mélangeant quatre concentrés pigmentaires et en déconcentrant le mélange par adjonction d'une base de peinture de nature chimique identique à celles numérotées de 1 à 10 dans le mode d'utilisation précédent.

Les essais ont été réalisés avec les produits de l'invention et des produits disponibles dans le commerce sous les marques ou dénominations Colortrend (de la firme NUODEX), Chroma-chem (NUODEX), Luconyl (BASF), Colanyl (HOECHST), Levanox (BAYER) et Winter-Bouts B.V. (WINTER).

Pour chaque concentré pigmentaire réalisé avec chaque véhicule, on a noté les caractéristiques suivantes :

A - L'aptitude du véhicule à réaliser des concentrés pigmentaires à taux élevé le pigment sans décantation de ce dernier et sans synérèse.

B - L'aptitude du véhicule à donner de bonnes caractéristiques colorimétriques, en particulier pas de phénomène de floculation, de flottation en mélange à une peinture déterminée.

C - L'aptitude du véhicule à ne pas modifier les caractéristiques physico-chimiques (séchage, applicabilité, propriétés mécaniques) et l'aspect des peintures avec lesquelles il est mélangé.

Ces aptitudes sont notées de 1 à 5
1 : très mauvaise aptitude
5 : très bonne aptitude

Les résultats sont rassemblés dans le tableau II suivant.

## TABLEAU II

Résultats

| Peintures | | 1 | | 2 | | 3 | | 4 | | 5 | | 6 | | 7 | | 8 | | 9 | | 10 | |
|---|---|---|---|---|---|---|---|---|---|---|---|---|---|---|---|---|---|---|---|---|---|
| caractéristiques / véhicules | A | B | C | B | C | B | C | B | C | B | C | B | C | B | C | B | C | B | C | B | C |
| 3 | 4 | 4 | 5 | 5 | 5 | 5 | 5 | 5 | 5 | 4 | 3 | 4 | 3 | 4 | 3 | 5 | 3 | 5 | 4 | 5 | 4 |
| 4 | 4 | 5 | 5 | 5 | 5 | 5 | 5 | 5 | 5 | 4 | 4 | 4 | 3 | 4 | 4 | 5 | 3 | 5 | 5 | 5 | 5 |
| 9 | 4 | 3 | 3 | 4 | 5 | 5 | 5 | 5 | 5 | 5 | 5 | 5 | 5 | 5 | 5 | 5 | 5 | 5 | 5 | 5 | 5 |
| 10 | 5 | 4 | 4 | 4 | 4 | 4 | 4 | 3 | 3 | 4 | 4 | 4 | 4 | 5 | 5 | 5 | 4 | 5 | 4 | 5 | 5 |
| Color trend | 5 | 4 | 4 | 4 | 3 | 1 | 1 | 1 | 1 | 1 | 1 | 1 | 1 | 1 | 1 | 2 | 2 | 2 | 2 | 1 | 1 |
| Chroma-chem | 5 | 1 | 1 | 2 | 2 | 2 | 2 | 2 | 2 | 3 | 3 | 3 | 4 | 3 | 3 | 3 | 4 | 4 | 4 | 4 | 5 |
| Luconyl | 5 | 5 | 5 | 1 | 1 | 1 | 1 | 1 | 1 | 1 | 1 | 1 | 1 | 1 | 1 | 1 | 1 | 1 | 1 | 1 | 1 |
| Colanyl | 5 | 5 | 5 | 1 | 1 | 1 | 1 | 1 | 1 | 1 | 1 | 1 | 1 | 1 | 1 | 1 | 1 | 1 | 1 | 1 | 1 |
| Levanox | 5 | 5 | 5 | 1 | 1 | 1 | 1 | 1 | 1 | 1 | 1 | 1 | 1 | 1 | 1 | 1 | 1 | 1 | 1 | 1 | 1 |
| Winter-Bouts BV | 4 | 1 | 1 | 2 | 2 | 1 | 1 | 5 | 5 | 4 | 4 | 4 | 4 | 5 | 4 | 4 | 4 | 4 | 4 | 5 | 5 |
| 14 | 5 | 1 | 1 | 5 | 5 | 5 | 5 | 5 | 5 | 5 | 5 | 5 | 5 | 5 | 5 | 5 | 5 | 5 | 5 | 5 | 5 |
| 15 | 5 | 1 | 1 | 5 | 5 | 5 | 5 | 5 | 5 | 5 | 5 | 5 | 5 | 5 | 5 | 5 | 5 | 5 | 5 | 5 | 5 |

## Revendications

1. Véhicule pour concentrés pigmentaires compatibles avec tous les peintures, vernis, encres et adhésifs, caractérisé en ce qu'il est constitué par au moins un télomère ou cotélomère d'un ou plusieurs monomères acryliques et d'un télogène MY, de formule générale

$$M-(CH_2-\overset{R_1}{\underset{R}{C}})_n-Y \qquad I$$

dans laquelle
R représente un groupe $-COOR_2$, un groupe carbamoyle ou cyano,
$R_1$ représente un atome d'hydrogène ou un groupe méthyle,
$R_2$ représente un atome d'hydrogène, un groupe alkyle linéaire ou ramifié de 2 à 50 atomes de carbone pouvant porter un ou plusieurs substituants hydroxy ou halogène, un groupe alcényle linéaire ou ramifié de 2 à 50 atomes de carbone, un groupe cycloalkyle de 3 à 8 atomes de carbone ou cycloalkyl(en $C_3$-$C_8$)-alkyle (en $C_1$-$C_{12}$) pouvant porter des substituants alkyle en $C_1$-à $C_6$, un groupe aryle ou aralkyle de 6 à 50 atomes de carbone pouvant porter des substituants alkyle en $C_1$ à $C_6$ ou halogène, un groupe dialkyl (en $C_1$-$C_3$)-aminoalkyle (en $C_1$-$C_{20}$), un groupe oxyéthyléné de formule $C_2H_4-(OC_2H_4)_m-OC_2H_5$ avec 1 m 50, ou un groupe époxydé de formule

$$-(CH_2)_p-(\underset{\diagdown O \diagup}{CH-CH})_q-CH_2)_r-CH_3 \quad \text{avec}$$

$0 \leq p \leq 12$, $1 \leq q \leq 10$ et $0 \leq r \leq 10$, $R_1$ et $R_2$ ne pouvant représenter simultanément l'hydrogène,
n est un nombre entier allant de 2 à 50, et
M et Y représentent les deux parties de la molécule du télogène dissocié.

2. Véhicule selon la revendication 1, caractérisée en ce que le monomère est choisi parmi les acrylates et méthacrylates dans lesquels $R_2$ est un groupe éthyle, lauryle, hydroxyéthyle, hydroxypropyle, hydroxybutyle, dibromopropyle, un groupe alcényle dérivé des acides linoléïque, palmitoléïque ou oléïque, cyclohexyle, tert-butyl-cyclohexyle, phénéthyle, diméthylaminoéthyle, diéthylaminoéthyle, diméthylaminonéopentyle, éthoxy-éthoxyéthyle ou glycidyle.

3. Véhicule selon la revendication 1, caractérisé en ce que le monomère est l'acrylate de butyle.

4. Véhicule selon la revendication 1, caractérisé en ce que le monomère est l'acrylate de 2-(2-éthoxy-éthoxy)-éthyle.

5. Véhicule selon la revendication 1, caractérisé en ce que le monomère est l'acrylate de 2-hydroxyéthyle.

6. Véhicule selon la revendication 1, caractérisé en ce que le monomère est le méthacrylate de glycidyle.

7. Véhicule selon l'une quelconque des revendications 1 à 6, caractérisé en ce que le télogène est un mercaptan.

8. Véhicule selon la revendication 7, caractérisé en ce que le mercaptan répond à la formule R'-SH dans laquelle R' est un groupe n-octyle, tert-nonyle, n-dodécyle, hexadécyle, cyclohexyle, benzyle, 2-hydroxyéthyle, 3-hydroxypropyle, 2-éthoxyéthyle, 2-méthoxycarbonyléthyle ou mercaptoéthyle.

9. Véhicule selon l'une quelconque des revendications 1 à 6, caractérisé en ce que le télogène est un phosphite de dialkyle en $C_1$ à $C_{18}$.

10. Véhicule selon l'une quelconque des revendications 1 à 6, caractérisé en ce que le télogène est un iodure d'hydrocarbure aliphatique pouvant porter des substituants halogènes.

11. Véhicule selon la revendication 10, caractérisé en ce que le télogène est le iodure d'éthyle, de propyle, de butyle, de perfluoroéthyle ou de perfluoro-n-hexyle.

12. Vehicule selon l'une quelconque des revendications 1 à 6, caractérisé en ce que le télogène est un composé de formule MY dans laquelle Y représente un atome de chlore et M est choisi parmi les groupements $CCl_3$, $-CCl_2-CF_3$, $-CCl_2COOCH_3$, $-CCl_2-CH_2$ $-CHCl$ $-COOCH_3$, $-CCCl_2$ - $(CH_2-CFZ)_s$ -CL ou s est 1, 2 ou 3 et Z représente un atome de chlore ou de fluor.

13. Véhicule selon l'une quelconque des revendications 1 à 6, caractérisé en ce que le télogène est un composé de formule MY dans laquelle Y représente un atome d'hydrogène ou de brome et M représente $-CCl_3$ ou $PO(OC_2H_5)_2$.

14. Concentré pigmentaire contenant un véhicule selon l'une quelconques des revendications 1 à 13.

15. Concentré pigmentaire selon la revendication 14, caractérisé en ce qu'il contient de 1 à 50% en poids de véhicule.

16. Concentré pigmentaire selon la revendication 15, caractérisé en ce qu'il contient de 5 à 25% en poids de véhicule.

17. Concentré pigmentaire selon la revendication 14, caractérisé en ce qu'il contient de 60 à 80% en poids de pigments minéraux.

18. Concentré pigmentaire selon la revendication 14, caractérisé en ce qu'il contient de 20 à 60% en poids de pigments organiques.

## Patentansprüche

1. Träger für mit allen Anstrichen, Lacken, Druckfarben und Klebstoffen verträglichen Pigmentkonzentraten, dadurch gekennzeichnet, dass er wenigstens aus einem Telomer oder Cotelomer eines oder mehrerer Acrylmonomere und aus einem Telogen MY mit der allgemeinen Formel (I)

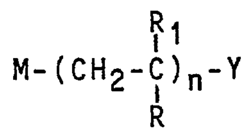

I

besteht, in welcher
R eine $-COOR_2$-Gruppe, eine Carbamoylgruppe oder eine Cyanogruppe bezeichnet;
$R_1$ ein Wasserstoffatom oder eine Methylgruppe bezeichnet;
$R_2$ ein Wasserstoffatom, eine geradkettige oder verzweigte Alkylgruppe mit 2 bis 50 Kohlenstoffatomen, die eine oder mehrere Hydroxy- oder Halogensubstituenten tragen kann, eine geradkettige oder verzweigte Alkenylgruppe mit 2 bis 50 Kohlenstoffatomen, eine Cycloalkylgruppe mit 3 bis 8 Kohlenstoffatomen, oder eine $C_{3-8}$-Cycloalkyl-$C_{1-12}$-alkylgruppe, die $C_{1-6}$-Alkylsubstituenten tragen kann, eine Arylgruppe oder Alkylgruppe mit 6 bis 50 Kohlenstoffatomen, die $C_{1-6}$-Alkylsubstituenten oder Halogen tragen kann, eine
$C_{1-3}$-Dialkyl-$C_{1-20}$-aminoalkylgruppe, eine Oxyethylengruppe der Formel
$C_2H_4-(OC_2H_4)m-OC_2H_5$ mit $1 \leq m \leq 50$, oder
eine Epoxidgruppe der Formel

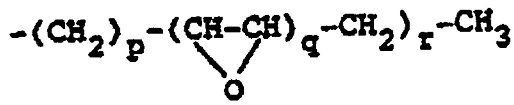

mit $0 \leq p \leq 12$, $1 \leq q \leq 10$ und $0 \leq r \leq 10$, bezeichnet, wobei $R_1$ und $R_2$ gleichzeitig nicht Wasserstoff bezeichnen können, n eine ganze Zahl zwischen 2 und 50 ist, und M und Y die zwei Teile des dissoziierten Telogenmoleküls bezeichnen.

2. Träger gemäss Anspruch 1, dadurch gekennzeichnet, dass das Monomer ausgewählt ist aus Acrylaten und Methacrylaten in denen $R_2$ eine Ethyl-, Lauryl-, Hydroxyethyl-, Hydroxypropyl-, Hydroxybutyl-, Dibrompropylgruppe, eine Alkenylgruppe, abgeleitet von der Linol-, Palmitin- oder Ölsäure, Cyclohexyl, tert-Butyl-cyclohexyl, Phenethyl, Dimethylaminoethyl, Diethyldaminoethyl, Dimethylaminoneopentyl, Ethoxy-ethoxyethyl oder Glycidyl bezeichnet.

3. Träger gemäss Anspruch 1, dadurch gekennzeichnet, dass das Monomer Butylacrylat ist.

4. Träger gemäss Anspruch 1, dadurch gekennzeichnet, dass das Monomer 2-2-Ethoxy-ethoxy)-ethylacrylat ist.

5. Träger gemäss Anspruch 1, dadurch gekennzeichnet, dass das Monomer 2-Hydroxyethylacrylat ist.

6. Träger gemäss Anspruch 1, dadurch gekennzeichnet, dass das Monomer Glycidylmethacrylat ist.

7. Träger gemäss einem oder mehreren der Ansprüche 1 bis 6, dadurch gekennzeichnet, dass das Telogen ein Mercaptan ist.

8. Träger gemäss Anspruch 7, dadurch gekennzeichnet, dass das Mercaptan der Formel R'–SH entspricht, in der R' eine n-Octyl-, tert-Nonyl, n–Dodecyl-, Hexadecyl-, Cyclohexyl-, Benzyl-, 2-Hydroxyethyl-, 3-Hydroxypropyl-, 2-Ethoxyethyl-, 2–Methoxycarbonylethyl- oder eine Mercaptoethylgruppe bezeichnet.

9. Träger gemäss einem oder mehreren der Ansprüche 1 bis 6, dadurch gekennzeichnet, dass das Telogen ein $C_{1-18}$-Dialkylphosphit ist.

10. Träger gemäss einem oder mehreren der Ansprüche 1 bis 6, dadurch gekennzeichnet, dass das Telogen ein aliphatisches Kohlenwasserstoffjodid ist, das Halogensubstituenten tragen kann.

11. Träger gemäss Anspruch 10, dadurch gekennzeichnet, dass das Telogen Ethyljodid, Propyljodid, Butyljodid, Perfluorethyljodid oder Perfluor-n-hexyljodid ist.

12. Träger gemäss einem oder mehreren der Ansprüche 1 bis 6, dadurch gekennzeichnet, dass das Telogen eine Verbindung der Formel MY ist, in welcher Y ein Chloratom bezeichnet und M ausgewählt ist aus
$CCl_3$, $-CCl_2-CF_3$, $-CCl_2COOCH_3$,
$-CCl_2-CH_2-CHCl-COOCH_3$,
$-CCCl_2-(CH_2-CF_2)_s-Cl$ und s 1, 2 oder 3 ist und Z ein Chlor- oder Fluoratom bezeichnet.

13. Träger gemäss einem oder mehreren der Ansprüche 1 bis 6, dadurch gekennzeichnet, dass das Telogen eine Verbindung der Formel MY ist, in welcher Y ein Wasserstoff- oder Bromatom bezeichnet und M $-CCl_3$ oder $PO(OC_2H_5)_2$ bezeichnet.

14. Pigmentkonzentrat, enthaltend einen Träger gemäss einem oder mehreren der Ansprüche 1 bis 13.

15. Pigmentkonzentrat gemäss Anspruch 14, dadurch gekennzeichnet, dass es 1 bis 50 Gew.% des Trägers enthält.

16. Pigmentkonzentrat gemäss Anspruch 15, dadurch gekennzeichnet, dass es 5 bis 25 Gew.% des Trägers enthält.

17. Pigmentkonzentrat gemäss Anspruch 14, dadurch gekennzeichnet, dass es 60 bis 80 Gew.% mineralischer Pigmente enthält.

18. Pigmentkonzentrat gemäss Anspruch 14, dadurch gekennzeichnet, dass es 20 bis 60 Gew.% organischer Pigmente enthält.

**Claims**

1. A carrier for pigmentary concentrates compatible with all paints, varnishes, inks and adhesives, characterised in that it comprises at least one telomer or cotelomer of one or more acrylic monomers and one telogen MY having the general formula

$$M-(CH_2-\underset{\displaystyle R}{\overset{\displaystyle R_1}{\overset{|}{\underset{|}{C}}}})_n-Y \qquad \text{I}$$

in which
R represents a $-COOR_2$ group, a carbamoyl or cyano group,
$R_1$ represents a hydrogen atom or a methyl group,
$R_2$ represents a hydrogen atom, a linear or branched alkyl group with 2 to 50 carbon atoms capable of carrying one or more hydroxy or halogen substituents, a linear or branched alkenyl group with 2 to 50 carbon atoms, a cycloalkyl group with 3 to 8 carbon atoms or cycloalkyl ($C_3$–$C_8$)-alkyl ($C_1$–$C_{12}$) group capable of carrying $C_1$ to $C_6$ alkyl substituents, an aryl or aralkyl group with 6 to 50 carbon atoms capable of carrying $C_1$ to $C_6$ alkyl or halogen substituents, a dialkyl ($C_1$–$C_3$)-aminoalkyl ($C_1$–$C_{20}$) group, an oxyethylene group having the formula $C_2H_4-(OC_2H_4)m-OC_2H_5$ where $1 \le m \le 50$, or an epoxide group having the formula

$$-(CH_2)_p-(\underset{\diagdown\,O\,\diagup}{CH-CH})_q-CH_2)_r-CH_3 \qquad \text{where}$$

$0 \le p \le 12$, $1 \le q \le 10$ and $0 \le r \le 10$, $R_1$ and $R_2$ not being capable of representing hydrogen simultaneously,
n is an integer from 2 to 50, and
M and Y represent the two parts of the dissociated telogen molecule.

2. A carrier according to claim 1, characterised in that the monomer is selected from the acrylates and methacrylates in which $R_2$ is an ethyl, lauryl, hydroxyethyl, hydroxypropyl, hydroxybutyl or dibromopropyl group, an alkenyl group derived from linoleic, palmitoleic or oleic acids, a cyclohexyl, tert-butyl-cyclohexyl, phenethyl, dimethylaminoethyl, diethylaminoethyl, dimethylaminoneopentyl, ethoxy-ethoxyethyl or glycidyl group.

3. A carrier according to claim 1, characterised in that the monomer is butyl acrylate.

4. A carrier according to claim 1, characterised in that the monomer is 2-(2-ethoxy-ethoxy)-ethyl acrylate.

5. A carrier according to claim 1, characterised in that the monomer is 2-hydroxyethyl acrylate.

6. A carrier according to claim 1, characterised in that the monomer is glycidyl methacrylate.

7. A carrier according to any of claims 1 to 6, characterised in that the telogen is a mercaptan.

8. A carrier according to claim 7, characterised in that the mercaptan has the formula R'–SH, in which R' is a n-octyl, tert-nonyl, n-dodecyl, hexadecyl, cyclohexyl, benzyl, 2-hydroxyethyl, 3-hydroxypropyl, 2-ethoxyethyl, 2-methoxycarbonylethyl or mercaptoethyl group.

9. A carrier according to any of claims 1 to 6, characterised in that the telogen is a $C_1$–$C_{18}$ dialkyl phosphite.

10. A carrier according to any of claims 1 to 6, characterised in that the telogen is an aliphatic hydrocarbon iodide capable of carrying halogen substituents.

11. A carrier according to claim 10, characterised in that the telogen is the iodide of ethyl, propyl, butyl, perfluoroethyl or perfluoro-n-hexyl.

12. A carrier according to any of claims 1 to 6, characterised in that the telogen is a compound having the formula MY, inwhich Y represents a chlorine atom and M is selected from the groups $CCl_3$, $-CCl_2-CF_3$, $-CCl_2COOCH_3$, $-CCl_2-CH_2-CHCl-COOCH_3$, $-CCCl_2-(CH_2-CFZ)_s-CL$, where s is 1, 2 or 3 and Z represents a chlorine or fluorine atom.

13. A carrier according to any of claims 1 to 6, characterised in that the telogen is a compound having the formula MY, in which Y represents a hydrogen or bromine atom and M represents $-CCl_3$ or $PO(OC_2H_5)_2$.

14. A pigmentary concentrate containing a carrier according to any of claims 1 to 13.

15. A pigmentary concentrate according to claim 14, characterised in that it contains 1 to 50% by weight of carrier.

16. A pigmentary concentrate according to claim 15, characterised in that it contains 5 to 25% by weight of carrier.

17. A pigmentary concentrate according to claim 14, characterised in that it contains 60 to 80% by weight of mineral pigments.

18. A pigmentary concentrate according to claim 14, characterised in that it contains 20 to 60% by weight of organic pigments.